# EUROPEAN PATENT SPECIFICATION

(11) **EP 2 249 942 B1**
(45) Date of publication and mention of the grant of the patent: **10.08.2011**
(21) Application number: 09702657.9
(22) Date of filing: 14.01.2009
(51) Int. Cl.: B01D 35/143, C02F 1/00, E03C 1/04, F16K 37/00, G05D 7/00

(54) **A WATER SUPPLY UNIT FOR PROVIDING PURIFIED WATER**
WASSERVERSORGUNGSEINHEIT ZUR BEREITSTELLUNG VON GEREINIGTEM WASSER
UNITÉ D'ALIMENTATION EN EAU POUR DÉLIVRER DE L'EAU PURIFIÉE

(30) Priority: 14.01.2008 BE 200800025
(43) Date of publication of application: 17.11.2010
(73) Proprietor: De Jonghe, Marc, 2000 Antwerpen (BE)
(72) Inventor: De Jonghe, Marc, 2000 Antwerpen (BE)
(74) Representative: Bird, Ariane
(86) International application number: PCT/EP2009/050395
(87) International publication number: WO 2009/090197

(56) References cited:
- EP-A- 0 108 371
- EP-A- 1 634 633
- US-A1- 2002 125 884
- US-A1- 2003 177 848
- US-A1- 2005 279 676
- US-B1- 6 375 834

## Description

### Technical field of the invention

The present invention relates to a water supply unit for providing purified water and to a method for calculating the total quantity of water supplied to a filter element. The filter element can form part of a water supply unit for providing filtered water. The water supply unit can for example be a complete distribution network or a part thereof, but also a separate tap.

### Prior art

The filtration of water to make the water suitable for use, in particular for consumption, is an increasingly frequent necessity.

Water, derived from water springs, water storage tanks or water wells, but also derived directly from water supply systems, may contain elements and constituents which the end user wishes to remove from the water.

A filter unit is often mounted directly as a component of the water supply facilities in for example housing. In many cases, the filter unit is placed directly after the volume meter and all the water coming from the volume meter flows through the filter unit. The volume meter can then be used to determine how much water has already flowed through the filter unit, and thus to what extent the filter unit has reached its filter capacity.

Even if just a part of the water flowing through the water supply facilities needs to be filtered, for example just the water which is to be used as drinking water, a filter unit can be built into the lines which will provide this filtered water. In this case too, the consumption of the filter unit is predicted by directly measuring the volume of water that is supplied to this filter unit by means of a volume meter, such as for example in JP2004183247.

A drawback is that elements present in the water to be filtered can influence the volume meter.

As an alternative, it is examined for what period a valve, for example a tap, is opened or closed. On the basis of the measured times and with reference to predefined flow rates, it is estimated what volume has already flowed through the filter unit. An example thereof is provided in US6375834; which document is considered to represent the closert prior art.

A drawback of this embodiment is that it can operate with a reasonable degree of accuracy only if the valve can be in just two positions: being completely open or completely closed.

### Summary of the invention

According to the present invention, a water supply unit is provided according to claim 1, which water supply unit comprises a regulatable valve, for example a tap. A method is also provided for calculating the total quantity of water supplied to a filter element comprised by a water supply unit accordind to claim 8.

The water supply unit according to the invention has the advantage that it is possible to examine in a more accurate manner how much water has already flowed through the filter unit, and thus if appropriate to what extent the filter capacity of the filter unit has been reached.

This objective is achieved by providing a water supply unit according to the present invention.

The water supply unit is provided for providing purified water. The water supply unit comprises a filter element for filtering water, at least one regulatable valve for controlling the flow rate of water which is supplied to the filter element, which valve can be set to more than two valve opening positions, a handle or turning knob for setting the at least one regulatable valve to the more than two valve opening positions by rotating the handle or turning knob over a rotation angle, whereby a determined rotation angle corresponds with each of the more than two opening positions, one or more sensors for issuing signals which are representative of the determined rotation angles of the handle or turning knob, a clock by which is determined the time duration during which the handle of turning knob is turned over a determined rotation angle and a calculating unit such as a computing unit suitable for calculating the total quantity of water supplied to the filter element using the signals from the one or more sensors and the time duration determined by means of the clock.

According to certain embodiments of the water supply unit, the water supply unit can further comprise a memory unit in which one or more look-up tables are stored whereby these look-up tables comprise information for converting the signals, issued by the one or more sensors, into a corresponding quantity of water.

The total quantity of water is the quantity of water that has been supplied to the filter element since the installing of the filter element, or since the resetting of the installation. If the filter element comprises a filter cartridge, this thus means the quantity of water that has been supplied to the filter cartridge since the installing of the filter cartridge in the filter element.

The water supply unit checks the rotation angle of the handle or the turning knob and indicates this rotation angle with the aid of one or more sensors, issuing signals representative for the rotation angle. The one or more sensors can detect more than two rotation angles of the handle or of the turning knob. Two rotation angles which the one or more sensors can detect correspond with the positions of the valve "completely open" and "completely closed" respectively. The one or more sensors can further also detect at least one, but preferably a plurality of, intermediate rotation angle(s). The number of rotation angles can consist of a limited number of angles, for example 3, 4, 5 or more. In an alternative embodiment, the rotation angle varies continuously between an initial value and an end value and the signals, issued by the one or more sensors vary between an initial value corresponding to the completely closed valve position and an end value corresponding a completely open valve position.

Since various rotation angles are detected, and converted into signals allowing these various angles to be determined, the quantity of water provided to the filter unit can be estimated more correctly and more accurately than in installations according to the prior art.

The water supply unit can comprise a plurality of regulatable valves, which for example each provide water at a water take-off point. Each of these plurality of regulatable valves can comprise a rotation angle sensor for issuing a signal which is representative of the rotation angle of the corresponding handle or turning knob. The calculating or computing unit can calculate, on the basis of the signals obtained from the plurality of sensors, the total quantity of water supplied to the filter element by also using time information derived from a clock.

The signals from the one or more sensors can be forwarded to the calculating or computer unit via a signal wire or wirelessly.

The calculating or computing unit is adapted to determine the rotation angle or angles on the basis of the signal or successive signals from the sensor or sensors, or on the basis of the signal or successive signals from each of the rotation angle sensors.

The total quantity of water supplied to the filter unit, for example to a filter cartridge in the filter unit, is determined via the calculating or computing unit.

The calculating or computing unit is adapted to calculate, for example on the basis of time information from a clock and on the basis of the signals obtained from the sensor or sensors, the total quantity of water that has been supplied to the filter element, for example to a filter cartridge of the filter element.

Thus, the calculating or computing unit can link, for example with the aid of a look-up table, the detected rotation angle to a flow rate of water being supplied at that moment to the filter unit, and do so for each of the regulatable valves should the water supply unit comprise a plurality of regulatable valves, and for each of the rotation angles.

The calculating or computing unit registers, if appropriate separately for each of the regulatable valves, the length of the period of time for which the rotation angle has a specific value, and calculates a volume of water that has been supplied during this period of time to the filter unit by multiplying the length of the period of time by a conversion factor corresponding to the signal, i.e. corresponding to the rotation angle of the handle or turning knob of that regulatable valve. This conversion factor can for example be selected by the computing unit from a look-up table.

All calculated quantities of water are accumulated, for example added up, in an appropriate manner over time. This accumulated value is indicative of the total quantity of water that has been provided to the filter unit. If, in the case of a plurality of regulatable valves, each valve is provided in a one-to-one relationship at a water take-off point, then the accumulation of each of the volumes of water is calculated for each of the valves as an indication of the total quantity of water that has been provided to the filter unit.

A sensor can be adapted to issue in a continuous manner, that is to say continuously over time or at constant time intervals between two signals, a signal which is indicative of the rotation angle at that specific moment. In this case, the calculating or computing unit can obtain, by accumulating the signals from the rotation angle sensor, if appropriate after multiplication by a factor which switches in an appropriate manner the signal obtained to an instantaneous water flow rate or the volume of water provided during the constant time interval, an accumulated value which is indicative of the total quantity of water that has been provided to the filter unit. This switching is possible by means of multiplication by a conversion factor. This conversion factor can for example be selected by the computing unit from a look-up table.

A sensor can be adapted to issue in a continuous manner, that is to say continuously over time or at constant time intervals between two signals, a signal which is indicative of the rotation angle at that specific moment. The sensor can for example comprise a regulatable resistance or regulatable capacity, the resistance or capacity being changed as the valve position changes. The signal can be a signal which is read out continuously or periodically from the resistance value or else the dielectric constant of the regulatable resistance or regulatable capacity.

A sensor can be adapted to issue a signal which is representative of the rotation angle at the moment at which the handle or turning knob is rotated in or past a specific position. The computing unit receives the signal from the sensor and from that moment the time span will be registered that elapses between receiving the signal and receiving a following signal which will indicate that the handle or turning knob is rotated in or past a further position or else whether the handle or turning knob is set back in or past the same position. The calculating or computing unit will calculate, on the basis of the registered time durations and with reference to the signals which were obtained at the start and end of the time duration, a volume of water with the aid of a conversion factor which is characteristic of the pair of signals obtained. For example, the calculating or computing unit will select, on the basis of the pair of signals, a conversion factor from a look-up table in order to convert the length of the time span to a supplied volume of water.

According to certain embodiments of the water supply unit, the one or more sensors are incorporated in the handle or turning knob of the at least one regulatable valve.

According to certain embodiments of the water supply unit, the water supply unit comprises one regulatable valve and the computing unit is incorporated in the handle or turning knob of the one regulatable valve. According to certain embodiments of the water supply unit, the computing unit comprises a comparison unit for comparing the calculated total quantity of water supplied to the filter element with a predefined maximum quantity of water.

According to certain embodiments of the water supply unit, the calculating or computing unit further comprises an output unit for signaling a calculated total quantity of water supplied to the filter element that exceeds a predefined part of the predefined maximum quantity of water

According to certain embodiments of the water supply unit, the water supply unit comprises a reset knob for resetting the calculated total quantity of water to zero.The one or more regulatable valves can be mounted in the water supply unit before or after the filter element. If the valves are mounted before the filter element, the valves prevent water from being supplied to the filter element. If the valves are mounted after the filter element, the valves prevent water from being discharged from the filter element, as a consequence of which no water can or will be supplied to the filter element either. In both cases, the valve positions will determine what quantity of water is supplied to the filter element.

The first regulatable valve can form part of a tap for providing filtered water at a water take-off point.

For each of the taps, the handle or turning knob can for example be rotated between an initial position, wherein the valve is completely closed and thus no water is supplied to the filter unit, and an end position, wherein the maximum water flow rate is applied to the filter unit via the valve. The generated signal can be an indication of the number of degrees over which the handle or turning knob is rotated.

If appropriate, the water supply unit comprises just one tap, and the filter unit can be integrated in the tap. If appropriate, the water supply unit is a tap comprising each of the elements of the water supply unit according to the first aspect of the invention.

If appropriate, the water supply unit comprises a plurality of taps, each of the taps serving to provide water at a water take-off point. Each of the taps then comprises one of the plurality of regulatable valves, together with if appropriate the associated valve position sensor and/or associated handle.

Each of the regulatable valves can be a rotatable valve, meaning that the valve opening, i.e. the valve position, is determined by rotation of a shut-off element in the valve. If appropriate, the rotation of the handle and the rotation of the valve, more particularly the shut-off element in the valve, can be coupled to each other at a constant ratio. If appropriate, the axes of rotation of the handle and shut-off element in the valve are identical, and the handle and the shut-off element in the valve will be rotated over an identical angle on rotation of the handle. Thus, the signal is indicative of the rotation of the handle, likewise in an identical manner indicative of the rotation of the shut-off element in the valve, and thus indicative of the rotation of the valve.

According to certain embodiments of the water supply unit, the sensor(s) of the first regulatable valve can be incorporated in the handle of the first regulatable valve.

In the case of a plurality of regulatable valves, the sensor(s) of the regulatable valve can in each case be incorporated in the handle of this regulatable valve.

Thus, for example, the handle can be provided with a cylindrical hollow space having a tubular wall, of which the axis of rotation of the handle and the cylinder axis coincide. A series of N sensor elements can be provided, possibly at an identical distance from one another along a section of the tubular wall of the cylindrical space. N is an integer greater than or equal to 3. The first sensor element will issue a signal if the valve is set in a completely closed position by rotation of the handle. The last, N^{th} sensor element will issue a signal if the valve is brought into a completely open position by rotation of the handle. The intermediate sensor elements will generate a signal if the valve is set by the handle to rotate past a specific angle. The elements of the valve position sensor can optionally be incorporated in a water-tight housing which fits in the hollow space of the handle.

Thus, the sensor should not enter into contact with the water flowing through the water supply unit so as to be able to estimate the volume of water that is or has been supplied to the filter element. The advantage is therefore also that any contamination or deposition of elements which occur in the water, for example deposition of lime, does not influence the functioning of the valve position sensor itself.

If, for example, the handle is provided with a cylindrical hollow space having a tubular wall, of which the axis of rotation of the handle or turning knob and the cylinder axis coincide, the computing unit, just like the sensor, can be incorporated in the hollow space of the handle, for example as a water-tight unit which fits into the hollow space.

Thus, the calculating or computing unit and sensor should not enter into contact with the water flowing through the water supply unit in order to be able to estimate the volume of water that is or has been supplied to the filter element. The advantage is therefore also that any contamination or deposition of elements which occur in the water, for example deposition of lime, does not influence the functioning of the computing unit and the valve position sensor itself.

According to certain embodiments of the water supply unit, the computing unit can further comprise a comparison unit for comparing the calculated total quantity of water supplied to the filter element with a predefined maximum quantity of water.

This predefined maximum quantity of water can be representative of the maximum volume of water that the filter unit, for example the filter cartridge of the filter unit, can filter, also known as the filter capacity of the filter unit.

The calculating or computing unit can then also examine to what extent the total quantity of water supplied to the filter unit has or has not exceeded the filter capacity, and how much volume of water can still be filtered before the filter capacity of the filter element is reached.

According to certain embodiments of the water supply unit, the calculating or computing unit can further comprise an output unit for signalling a calculated total quantity of water supplied to the filter element that exceeds a predefined part of the predefined maximum quantity of water.

As a result of the comparison, it is possible to predict to what extent a filter unit is used up or consumed. In many cases, filter units have just a specific quantity of water that can be filtered. Once this volume has been reached, the filter element, or the filter cartridge, should best be replaced. The foregoing embodiment allows it to be predicted in an accurate manner when the quantity of water that has been supplied to the filter unit approaches or exceeds this predefined maximum volume. If appropriate, the output unit can indicate the ratio between water already supplied and filter capacity, for example expressed as a percentage of the filter capacity.

If appropriate, an indication, driven by the output unit, can be given as to whether the total quantity of water supplied is below the filter capacity or has exceeded this filter capacity.

Indications can for example be visual output signals, for example output by one or more LEDs which light up if the total quantity of water supplied is greater than the filter capacity. The output unit can indicate to what extent the total quantity of water supplied is below the filter capacity. The signal output unit can comprise a first indicator, for example one or more LEDs, which light up if the total quantity of water supplied is less than the filter capacity. The signal output unit can further comprise a second indicator, for example one or more LEDs, which light up if the total quantity of water supplied is equal to the filter capacity, and/or if the total quantity of water supplied has exceeded the filter capacity.

Additionally or alternatively, a numerical value can be specified by means of for example a display, which numerical value is related to the difference between the calculated total quantity of water supplied to the filter element and the filter capacity of the filter element.

Audio output signals, optionally combined with visual signals, can also be used.

If the water supply unit comprises just one regulatable valve, for example a tap, the signal output unit can for example be provided with the one or more LEDs at the level of the handle or turning knob. If appropriate, if the signal output unit comprises LEDs for issuing a signal, the LEDs can be integrated in the hollow space of the handle, and the handle can comprise openings in order to show on the outside of the handle the light which is generated by the LEDs as the signal. In this way, a visual signal can be generated on the outside of the handle. The LEDs may be integrated in a water-tight housing also comprising the other elements of the valve position sensor and/or the control unit.

The calculating or computing unit can further comprise a memory for, for example, keeping an up-to-date check on the total quantity of water supplied to the filter element, for maintaining the look-up table or look-up tables, the predefined maximum quantity of water that may be supplied to the filter element (i.e. the filter capacity) and the like.

The water supply unit can further comprise a reset unit for restarting the accumulation of the volume of water supplied to the filter element. For example, in the case of filter cartridges, if appropriate disposable filter cartridges, the accumulated volume will be brought to zero via a reset unit when the filter cartridge is cleaned or exchanged.

The water supply unit can also have an interface unit for entering values in the look-up table or look-up tables, the predefined maximum quantity of water that may be supplied to the filter element (i.e. the filter capacity) and the like.

The filter element can for example be suitable for removing lime, chlorine, heavy metals, sediment particles, bacteria and the like from the water.

The filling of the filter element (that is to say, the part of the filter that ensures the filtering effect) can for example be KDF, activated carbon, can comprise grains of silver or can be a microfilter.

Although this does not have to be regarded as entailing limitation, filter units can be provided with a filter capacity between 400 litres and 1,200 litres.

If appropriate, a pressure regulator and/or a pressure sensor can be supplied to the water supply unit in order to determine more accurately the volume of the water supply unit in the case of changing pressures. This pressure, measured by the pressure sensor, can be supplied by the pressure sensor to the computing unit as an input signal.

The filter element can comprise a filter cartridge and a cartridge holder. The filter cartridge is exchangeable, and can if appropriate be a disposable filter cartridge or a recyclable filter cartridge.

The term "flow rate" refers to the volume per unit of time that is delivered to the filter unit or if necessary flows through the regulatable valve.

A method is provided for calculating a total quantity of water supplied to a filter element. The method includessupplying water to a filter element by means of at least one regulatable valve for controlling the flow rate of water supplied to the filter element, setting the at least one valve to one of more than two opening positions by turning a handle or turning knob over a rotation angle, corresponding to the one position of the valve; generating a signal which is representative of the rotation angle of the handle or turning knob; determining the time duration during which the handle of turning knob is turned over a determined rotation angle and calculating the total quantity of water delivered to the filter element, using the signals representative of the rotation angle of the handle or rotation knob and said time duration.

According to certain embodiments of the method, the method further comprises selecting a conversion factor from a look-up table with conversion factors, wherein each conversion factor corresponds to a determined rotation angle and wherein the total quantity of water delivered to the filter element is calculated on the basis of said time duration and the selected conversion factor.

According to certain embodiments of the method, the calculated total quantity of water supplied to the filter element can furthermore be compared with a predefined maximum quantity of water that can be supplied to the filter element.

According to certain embodiments of the method, an output signal can furthermore be issued if the known total quantity of water supplied to the filter element is equal to or greater than a predefined part of the predefined maximum quantity of water that can be supplied to the filter element.

The method is therefore also a method for monitoring the consumption of the filter element, for example of the filter cartridge forming part of the filter element.

According to certain embodiments of the method, a signal can be generated in a continuous manner, which signal is indicative of the rotation angle of the handle or rotating knob.

The method according to embodiments can provide, as a result of the accumulation of the signals indicative of the valve positions of the regulatable valves, optionally after processing, for example after multiplication by a factor which switches in an appropriate manner the signal obtained or the signals obtained to an instantaneous water flow rate or the volume of water delivered during the constant time interval by the corresponding valve, an accumulated value which is indicative of the total quantity of water that is provided to the filter unit. This switching is possible by means of multiplication by a conversion factor. This conversion factor can for example be selected from a look-up table.

According to certain embodiments of the method, a signal can be generated that is representative of the rotation angle at the moment at which the valve opening position is set in or past a determined position. According to certain embodiments of the method, the time duration can be registered that elapses between receiving a first signal representative of the rotation angle of the handle or turning knob and receiving a following signal representative of the rotation angle of the handle or turning knob.

Each of the regulatable valves can be adapted to provide a signal which is indicative of the rotation angle of the handle or the turning knob at the moment at which the valve position is in or past a set position. A time span is registered during which a signal indicative of the valve position of the regulatable valve is generated, until a following signal indicative of a following valve position is generated. On the basis of the registered time spans and with reference to the signals which are obtained during said time spans, a volume of water is calculated using a conversion factor which is characteristic of the signals obtained. For example, a conversion factor can be selected from a look-up table on the basis of the signals obtained in order to convert the length of the period of time to a supplied volume of water that is supplied by this regulatable valve to the filter unit in question.

Separate and preferential aspects of the invention are presented in associated independent and dependent claims. Features of the dependent claims can be combined in an appropriate manner with features of the independent claims and with features of other dependent claims, and not just as explicitly presented in the claims.

The reference numerals as used hereinafter refer to the appended drawings. Other features, properties and advantages of the present invention will become clear from the following detailed description together with appended figures which illustrate, as an example, the principles of the invention.

### Brief description of the figures

Figure 1 is a schematic view of an embodiment of a water supply unit according to the present invention;
Figure 2A and Figure 2B are schematic views of regulatable, rotatable valves and parts thereof, which rotatable valves can form part of the water supply unit from Figure 1;
Figures 3A and 3B are schematic views of embodiments of a water supply unit according to the present invention;
Figure 4A is a schematic view of a tap as an example of a water supply unit according to the present invention; and
Figures 4B and 4C are details of the tap from Figure 4A.

In the figures, like reference numerals refer to the same or similar elements.

### Embodiment

The present invention will be described based on specific embodiments and with reference to specific drawings. The invention is however not limited thereto, but rather it is limited only by the scope of protection of the claims.

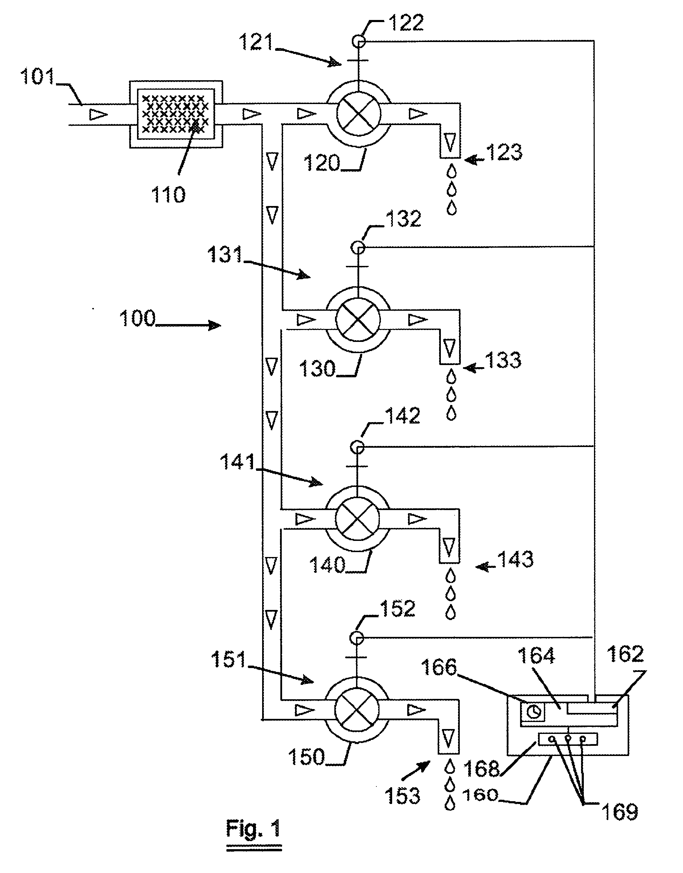

Figure 1 shows schematically a water supply unit 100 for providing purified water.

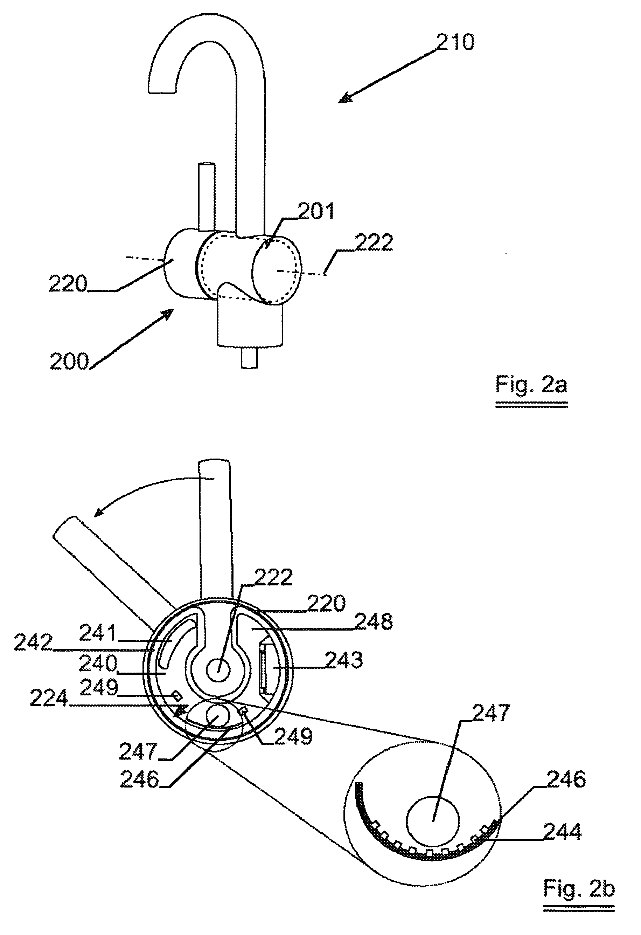

The water supply unit 100 comprises a filter element 110 for filtering water. The water supply unit 100 further comprises at least a first regulatable valve 120 for controlling the flow rate of water which is supplied to the filter element 110. In the illustrated embodiment, the water supply unit 100 comprises four regulatable valves 120, 130, 140 and 150, for example rotatable valves as will be illustrated with reference to Figures 2A and 2B. However, the invention is not limited thereto. Any suitable number of regulatable valves can be present in the water supply unit 100. Each of the valves 120, 130, 140 and 150 can be set to more than two valve positions. Each of the valves 120, 130, 140 and 150 can be completely open or completely closed, or be set in at least one intermediate position.

Each regulatable valve 120, 130, 140 and 150 comprises a valve position sensor 122, 132, 142 or 152 respectively, for supplying a signal which is indicative of the valve position as the corresponding regulatable valve 120, 130, 140 or 150 respectively.

The water supply unit 100 further comprises a control unit 160 for determining the total quantity of water delivered to the filter element 110. The control unit 160 comprises a signalling unit 162 for receiving the signals from the valve position sensors 122, 132, 142 and 152 of the regulatable valves 120, 130, 140 and 150. The control unit 160 further comprises a computing unit 164 suitable for calculating the total quantity of water supplied to the filter element 110 using the signals from the valve position sensors 122, 132, 142 and 152 of the regulatable valves 120, 130, 140 and 150.

Furthermore, the control unit 160 comprises a clock 166 for providing time information to the computing unit 164.

The control unit 160 further comprises an output unit 168 adapted for signalling if the calculated total quantity of water supplied to the filter element 110 is greater than or equal to a predefined maximum quantity of water. In the illustrated embodiment, the output unit comprises a multiplicity of indicators, for example light indicators such as for example LEDs, for example three LEDs 169, which light up in accordance with the difference between the calculated total quantity of water supplied to the filter element 110 and the predefined maximum quantity of water. If the calculated total quantity of water supplied to the filter element 110 is less than a first predefined part of the predefined maximum quantity of water, for example less than 80 % of the predefined maximum quantity of water, just one of the LEDs 169 will light up. If the calculated total quantity of water supplied to the filter element 110 is greater than the first predefined part of the predefined maximum quantity of water, for example more than 80 % of the predefined maximum quantity of water, but less than the predefined maximum quantity of water, two of the LEDs 169 will light up. If the calculated total quantity of water supplied to the filter element 110 is greater than or equal to the predefined maximum quantity of water, the three LEDs 169 will light up.

The aforementioned embodiment with 3 visual indicators for the range of the predefined maximum quantity of water is just one of the possible embodiments. In alternative embodiments, a different number of visual indicators can be used for the range of different predefined parts of the maximum quantity of water. The predefined parts can be different from that which was stated hereinbefore. In further alternative embodiments, use can be made of indicators other than visual indicators, for example an audio indicator. In still other embodiments, the indicator is not visible at all times, but the results of the measurements can be requested in one way or another, for example by depressing a key, after which a value can be read out, or a visual indication for example via LEDs as specified hereinbefore, or an audio indication of the measured quantity of water and/or a comparison thereof with the predefined maximum quantity of water can be obtained.

Each of the regulatable valves 120, 130, 140 and 150, each with an associated valve position sensor 122, 132, 142 and 152, can form part of a tap 121, 131, 141 or 151 respectively. Each of the taps serves to provide filtered water at a water take-off point 123, 133, 143 or 153 respectively. In the illustrated embodiment, the four taps 121, 131, 141 and 151 are integrated in parallel in a water supply unit, for example a distribution network in a house or block of flats. The water take-off points 123, 133, 143 and 153 respectively can for example serve to provide water to sinks, washbasins, washing-up bowls, bathtubs, showers, drinking water supply points and the like. The taps serve to control the flow rate of water flowing out of this water take-off point. The opening of each of the taps 121, 131, 141 and 151 causes water, fed via a feed line 101, to flow through the filter element 110 to the opened regulatable valve 120, 130, 140, 150 of the tap 121, 131, 141, 151 and also to be supplied to the water take-off point 123, 133, 143, 153 in question. As a consequence, the flow rate of water which is supplied to the filter element 110 is controlled by the regulatable valves 120, 130, 140, 150, even in the arrangement as shown in Figure 1, where the taps 121, 131, 141 and 151 are mounted upstream of the filter element 110.

The total quantity of water supplied to a filter element 110 can be determined by registering the supply of water to the filter unit by opening and controlling the regulatable valves 120, 130, 140, 150 in accordance with the desired flow rate. As stated above, the flow rate of water flowing through the filter element 110 will be controlled by opening, closing or controlling the valves 120, 130, 140 and/or 150.

During opening and closing, and if appropriate also while the regulatable valves 120, 130, 140 and/or 150 are left in a given position, a signal is, in accordance with embodiments of the present invention, generated that is indicative of the valve position of the corresponding regulatable valve 120, 130, 140 or 150 by means of the respective valve position sensors 122, 132, 142 or 152.

These signals are forwarded via a suitable medium to the control unit 160 via the signal input unit 162. This can for example be via a signal wire, for example copper wire or fibre optic cable, or via wireless transmission between a sender which is present in each of the regulatable valves and a receiver forming part of the signal input unit 162.

The signals can be digital signals or analog signals, or can if appropriate also be optical signals which are for example forwarded to the signal input unit 162 via a fibre optic cable.

The signals received by the valve position sensors are converted by the computing unit 164 into flow rates flowing through each of the regulatable valves 120, 130, 140, 150. The computing unit 164 has the protocols or computing rules for converting the signals into flow rates. For example, on the basis of the time information which can be delivered by a clock 166, the computing unit 164 can also convert the flow rates for each regulatable valve 120, 130, 140 or 150 into volumes of water that have flowed through the regulatable valve 120, 130, 140 or 150 in question, which volumes have also been filtered through the filter unit 164. This is possible, for example, by multiplying the flow rate of one of the regulatable valves 120, 130, 140 or 150, converted by the computing unit 164, by the length of the period of time for which this flow rate has flowed through the regulatable valve in question. The computing unit 164 can subsequently accumulate all calculated volumes of all regulatable valves 120, 130, 140 or 150 and thus determine the total quantity of water that has been delivered to the filter unit 110.

For converting the signals into flow rates, the computing unit 164 can optionally have one or more look-up tables, stored in a memory element. The look-up tables can contain information in order to convert a signal, indicative of a specific position of a regulatable valve, into the corresponding flow rate flowing through the regulatable valve. These look-up tables can optionally vary for each regulatable valve.

The calculated total quantity of water supplied to the filter element 110 can optionally be compared by the computing unit 164 to a predefined maximum quantity of water that can be supplied to the filter element 110. Furthermore, an output signal can be generated if the calculated total quantity of water supplied to the filter element 110 exceeds a specific value, as a function of the maximum quantity of water that can be supplied to the filter element 110. An output signal can for example be generated if the total quantity of water supplied to the filter element 110 is equal to or greater than a predefined maximum quantity of water that can be supplied to the filter element 110. The output signal can for example be a visual or audio signal; however, the invention is not necessarily limited thereto.

Furthermore, the control unit 160 can comprise a reset unit (not illustrated). In the case of the filter unit 110 being replaced or cleaned or, in the case of the filter unit 110 comprising a filter cartridge, if the cartridge is replaced, the accumulation of the supplied volumes of water can be restarted from zero via the reset unit. Thus, for example, the total volume of water supplied to the filter unit 110 can be stored in a memory unit of the computing unit 164. On activation of the reset unit, for example a reset button, this part of the memory unit can be erased or be restored to an initial value.

A possible embodiment of a regulatable valve 200, which can be used for each of the regulatable valves 120, 130, 140 and 150, is illustrated schematically in Figures 2A and 2B. Figure 2A shows schematically a general overview of a regulatable valve forming part of a tap 210. Figure 2B is a schematic view of the handle 220 which is provided with the valve position sensor 240.

The regulatable, in this case rotatable, valve 200 is part of a tap 210. The regulatable valve 200 is provided with a handle 220 which is rotatable about the axis 222. The handle 220 can be moved, for example rotated, by a user, for example with the aid of a lever which is attached to the handle 220 in an appropriate manner. The regulatable valve 200 can be set in various positions by rotation of the handle 220 about the axis 222. If appropriate, the operating part 201 of the regulatable valve 200 (that is to say, the part for opening or closing the inlet or outlet of the regulatable valve 200) can be rotatable about the same axis 220.

The valve position sensor 240 of the regulatable valve 200 is integrated in the handle 220 of the regulatable valve. The handle 220 can be provided with a cylindrical hollow space 224 having a tubular wall, the axis of rotation 222 of the handle 220 and the axis of the cylindrical hollow space 224 coinciding.

A series of N sensor elements 244 can be provided, possibly at an identical distance from one another, along a section of the tubular wall of the cylindrical space 224 forming a sensor zone 246. N is an integer greater than or equal to 3, in this case as an example 9. If appropriate, as shown in Figure 2B, the sensor elements 244 are mounted in a water-tight housing 242, which housing fits in the hollow space 224 of the handle. The sensor elements 224 are thus provided along the inner wall of the hollow space 224.

This series of sensor elements 244 can for example be a series of pressure sensors which are activated by means of a ball 247 or a cylinder which rolls in a roll path 248 in the water-tight housing 242 and will seek under gravity to move at all times to the lowest point of the roll path 248. The roll path 248 can be delimited by two movement limiters 249.

In an alternative embodiment, the series of sensors 244 can be a series of electrical contacts, triggered by contact with an electrically conductive ball which moves in a roll path. If appropriate, each sensor element can comprise two contact points between which the electrically conductive ball forms an electrical contact if the ball makes contact with both contact points.

As a result of rotation of the handle 220 about the axis 222, the ball 247 will activate sensor elements when the handle 220 is rotated at a specific angle. The valve position sensor 240 can comprise a circuit, for example an electric circuit, which generates a signal which is indicative of the sensor element 244 which is activated by the ball 247. Since the activating of a sensor element 244 is indicative of the position of the handle 220 and since the handle position is related to the position of the regulatable valve 200, the signal will be indicative of the valve position of the regulatable valve 200.

The valve position sensor 240 can further comprise a battery 243 for providing all remaining elements of the valve position sensor 240 with electric current or voltage.

The first sensor element in the series of sensor elements 224 will issue a signal if the regulatable valve 200 is set in a completely closed position by rotation of the handle 220. The last, in the illustrated embodiment the 9^{th}, sensor element will issue a signal if the regulatable valve is brought into a completely open position by rotation of the handle 220. The intermediate sensor elements will generate a signal if the valve is set by the handle to rotate past a specific angle. The angle of rotation over which the handle 220 can rotate can vary in accordance with the type of regulatable valve. It can vary for example between 0° and 90°.

A valve position sensor 240 will issue a signal which is indicative of the valve position at the moment at which the regulatable valve is set in or past a specific position by rotation of the handle 220.

The valve position sensor can forward this signal, for example via a sender 241, to a receiver which can form part of the signal input unit 162 of the control unit 160.

Returning to Figure 1, the control unit 160 receives the signal from the valve position sensor 240 (being in the embodiment illustrated in Figure 1 from one of the valve position sensors 122, 132, 142, 152). The computing unit 164 will from that moment register the time span which elapses between receiving the signal and receiving a following signal; this will indicate that the valve is set in or past another position.

The computing unit 164 will calculate, on the basis of the registered lengths of the periods of time and with reference to the signals which were received at the start and end of the periods of time, a volume of water based on a conversion factor which is characteristic of the received signals. For example, the computing unit 164 will select on the basis of a received signal a conversion factor from a look-up table in order to convert the length of the period of time into a volume of water supplied to the regulatable valve in question.

This conversion of valve positions into supplied volumes of water can take place for each of the regulatable valves 120, 130, 140 and 150. By accumulation of all volumes of water supplied to the regulatable valves, it is possible to calculate the total quantity of water supplied that has been supplied to the filter unit 110.

Since all elements of the valve position sensors can be mounted in water-tight housings, the valve position sensors will not have to enter into contact with the water flowing through the regulatable valves, and thus through the water supply unit.

In an alternative embodiment of the valve position sensor 240, the series of sensor elements is replaced by two parallel strips made of a conductive material having a known resistance value per unit of length. A ball or preferably a cylinder makes contact with both strips, thus forming a resistance which is dependent on the place where the ball or cylinder makes contact with the strips. If the ball or cylinder is moved in a roll path, in a similar manner to that presented in Figures 2A and 2B, then the place where the ball or cylinder makes contact with the two strips is dependent on the rotation of the handle about its axis of rotation. The valve position sensor can now measure continuously or periodically the resistance value of the system of parallel strips and the ball or cylinder. This resistance value can be forwarded, if appropriate in switched-over form, to the control unit 160 as a signal indicative of the rotational position of the handle, and thus of the valve position of the regulatable valve. The computing unit 164 can calculate, in a similar manner to that discussed hereinbefore, the volume of water flowing through the regulatable valve.

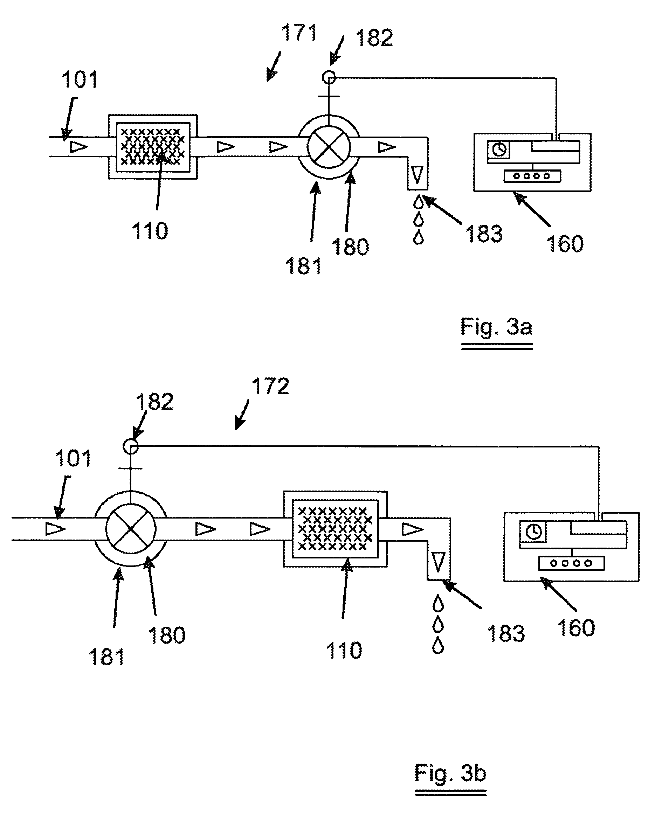

Other embodiments of water supply units 171 and 172 are represented in Figures 3A and 3B. In these embodiments, which are similar to the embodiment as shown in Figure 1, the water supply unit 171 or 172 respectively comprises just one regulatable valve 180.

The regulatable valve 180 can be mounted before the filter element 110 in the water supply unit 172, as shown in Figure 3B. Alternatively, the regulatable valve 180 can be mounted after the filter element 110 in the water supply unit 171, as shown in Figure 3A. If the valve is mounted before the filter element, the valve prevents water from being supplied to the filter element 110. If the valve is mounted after the filter element, the valve prevents water from being discharged from the filter element, as a consequence of which no water can or will be supplied to the filter element either. In both cases, the valve position will determine what quantity of water is supplied to the filter element. The regulatable valve 180, with the associated valve position sensor 182, forms part of a tap 181. The tap serves to provide filtered water at a water take-off point 183.

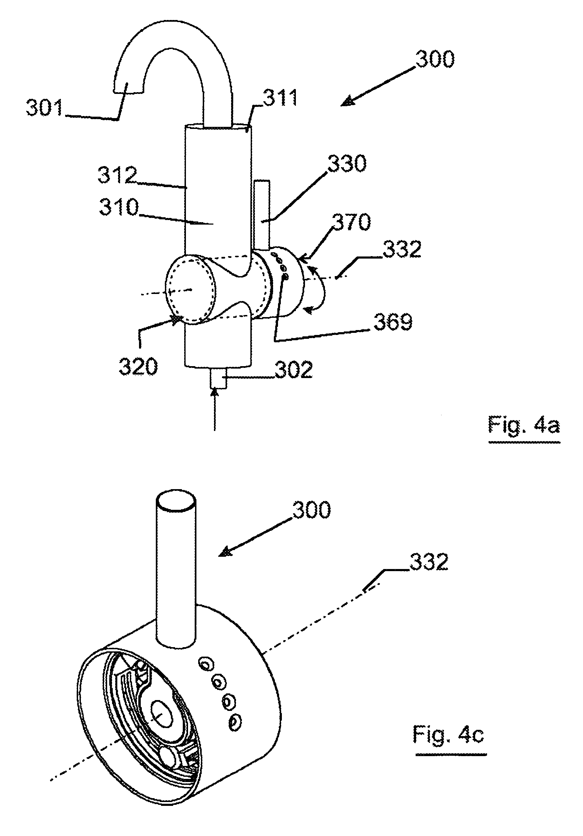

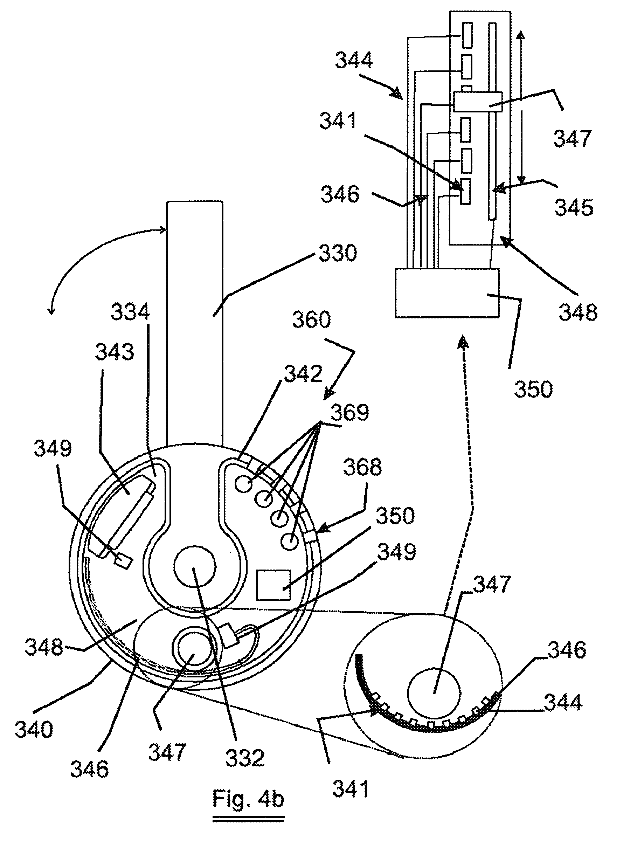

The regulatable valve 180 can for example form part of a tap as shown and described with reference to Figures 2A and 2B, or of a tap as will further be discussed with reference to Figures 4A, 4B and 4C. In this latter case, the control unit 160 is completely incorporated in the tap, whereas this is not the case in the other embodiment. However, the invention is not limited to regulatable valves 180 forming part of a tap as described in embodiments of the invention. Other taps or other regulatable valves can also be used.

A further embodiment of a water supply unit 300 according to the present invention is shown in Figure 4A. Figures 4B and 4C show a detail of the handle 330 forming part of the water supply unit 300.

The water supply unit 300 is a tap comprising a filter unit 310. The filter unit 310 will be provided with water to be filtered via a regulatable valve 320 and a supply line 302. The filter unit 310 and the regulatable valve 320 can form part of a single entity which, as such, can be used for providing filtered water to sinks, washbasins, washing-up bowls, bathtubs, showers, drinking water supply points and the like, for example by means of a tap mouth 301.

The filter unit 310 can comprise a filter housing 311 and a filter cartridge 312. The filter housing 311 can be opened or is removable from the tap 300 in order to allow the filter cartridge 312 to be replaced.

The regulatable valve 320, in this case a rotatable valve as also described with reference to Figures 2A and 2B, can be controlled, in this embodiment by rotation, in more than two positions (that is to say, in the completely open state, in the completely closed state and in at least one position between these two states). Preferably, however, the regulatable valve 320 can be set in a plurality of intermediate positions.

The regulatable valve 320 is provided with a handle 330. As shown in Figure 3B, a valve position sensor 340 is incorporated in this handle 330.

The handle 330 is rotatable about an axis 332. The regulatable valve 320 can be set in various positions by rotation of the handle 330 about the axis 332. If appropriate, the operating part of the regulatable valve 320 (that is to say, the part which ensures the opening or closing of the inlet or outlet of the regulatable valve 320) can be rotatable about the same axis 332.

As may be seen most clearly in Figure 4B, a valve position sensor 340 of the regulatable valve 320 is incorporated in the handle 330 of the regulatable valve 320. The handle 330 is provided with a cylindrical hollow space 334 having a tubular wall, of which the axis of rotation 332 of the handle 330 and the cylinder axis coincide.

A multiplicity of sensor elements, for example a series of N sensor elements 344, possibly at an identical distance from one another, can be provided along a section of the tubular wall of the cylindrical space 334 forming a sensor zone 346. N can be an integer greater than or equal to 3, in this case as an example 9. If appropriate, as shown in Figure 4B, the sensor elements can be mounted in a water-tight housing 342, which housing fits in the hollow space 334 of the handle. The sensor elements 344 are thus provided along the inner wall of the hollow space 334.

Identically or similarly to the valve position sensor 240 in Figure 2B, the series of sensor elements can be a series of pressure sensors which are activated by means of a ball or a cylinder which rolls in a roll path in a water-tight housing and will seek under gravity to move at all times to the lowest point of the roll path. The roll path can be delimited by two movement limiters.

In an alternative embodiment, as shown in Figures 4A, 4B and 4C, the series of sensors 344 can be a series of electrical contacts which are triggered or activated by contact with an electrically conductive roll or cylinder 347 which moves in a roll path 348. Each sensor element comprises two contact points 341 and 345 between which the electrically conductive cylinder makes electrical contact if the cylinder makes contact with both contact points 341 and 345. All contact points 345 can be provided by means of one conductive strip which will act as a common conductor and is coupled to a control unit 160. The conductive cylinder 347 makes contact between the conductive strip and one of the other contact points 341 pertaining to one of the sensor elements 344. This activates the sensor element by which the two contact points are connected.

Each of the first contact points 341 is connected to a control unit 350 in order to forward a signal to the input unit of the control unit 350. A signal of this type is obtained on closing of the sensor element (that is to say, the electrical connection of the first and second contact point, in this case of the electrical connection of the first contact point with the conductive strip).

In a further alternative, each sensor element comprises two contact points, each of the second contact points being electrically insulated from one another.

As a result of rotation of the handle 330 about the axis 332, the cylinder 347 will activate sensor elements 344 when the handle 330 is rotated at a specific angle. The valve position sensor 340 can comprise an electric circuit which generates a signal which is indicative of the sensor element 344 which is activated by the ball 347. Since the activating of a sensor element 344 is indicative of the position of the handle 330 and since the handle position can be unambiguously related to the position of the regulatable valve 320, the signal will be indicative of the valve position of the regulatable valve 320.

The valve position sensor 340 can further comprise a battery 343 for providing all remaining elements of the valve position sensor with electric current or voltage.

The first sensor element in the series of sensor elements 344 will issue a signal if the regulatable valve 320 is set in a completely closed position by rotation of the handle 330. The last, in the illustrated embodiment the 9^{th}, sensor element will issue a signal if the regulatable valve is brought into a completely open position by rotation of the handle 330. The intermediate sensor elements will generate a signal if the valve is set by the handle to rotate past a specific angle. The angle of rotation over which the handle 330 can rotate can vary in accordance with the type of regulatable valve. It can vary for example between 0° and 90°.

If appropriate, the first and/or last sensor element is integrated in the movement limiter.

A valve position sensor 340 will issue a signal which is indicative of the valve position at the moment at which the regulatable valve is set in or past a specific position by rotation of the handle 330.

The water supply unit 300 further comprises a control unit 350 which can also be completely incorporated in the handle 330. The control unit 350 receives the signal from the valve position sensor 340; if appropriate, the signal can be directly generated by one of the sensor elements 344. The control unit comprises a signal input unit and a computing unit. The signal input unit and the computing unit can for example be implemented as an electronic circuit. Just as was discussed for the computing unit 160 from Figure 1, the computing unit can for example determine, using the signals from the valve position sensor 340, the water flow rate, for example calculate the flow rate of water which has flowed through the regulatable valve 320. This is possible for example by measuring the time intervals between two successive signals, on the basis of time information obtained from a clock, and converting these time intervals into a volume of water by multiplying the length of the time interval by a conversion factor which is selected for example from a look-up table, for example on the basis of a measured signal. The computing unit accumulates all successive specific volumes and thus calculates the total volume which is supplied to the filter unit 310 via the regulatable valve 320. The one or more look-up tables, and also the calculated volume, can be stored in a memory unit forming part of the computing unit, for example in the form of a memory implemented in the electronic circuit.

The calculated total quantity of water supplied to the filter unit 310 can optionally be compared by the computing unit forming part of the control unit 350 with a predefined maximum quantity of water that can be supplied to the filter unit 310. Furthermore, an output signal can be issued if the calculated total quantity of water supplied to the filter unit 310 exceeds a predefined value, as a function of the maximum quantity of water that can be supplied to the filter unit 310, for example if the supplied quantity of water is equal to or greater than the predefined maximum quantity of water that can be supplied to the filter unit 310.

The control unit 350 further comprises an output unit 360 for signalling at least the calculated total quantity of water supplied to the filter unit 310, which is greater than or equal to the predefined maximum quantity of water. In this embodiment, the output unit 360 comprises a multiplicity of, for example four, LEDs 369 which light up in accordance with the difference between the calculated total quantity of water supplied to the filter unit 310 and the predefined maximum quantity of water. If the calculated total quantity of water supplied to the filter unit 310 is less than a first predefined part of the predefined maximum quantity of water, for example less than 30 % of the predefined maximum quantity of water, just one of the LEDs 369 will light up. If the calculated total quantity of water supplied to the filter unit 310 is less than a second predefined part of the predefined maximum quantity of water, but more than the first predefined part, for example less than 60 % but more than 30 % of the predefined maximum quantity of water, two of the LEDs 369 will light up. If the calculated total quantity of water supplied to the filter unit 310 is greater than the second predefined part of the predefined maximum quantity of water, for example more than 60 % of the predefined quantity of water, but less than the predefined maximum quantity of water, three of the LEDs 369 will light up. If the calculated total quantity of water supplied to the filter element is greater than or equal to the predefined maximum quantity of water, the four LEDs 369 will light up.

The LEDs 369 are optionally, but preferably, also built into the water-tight housing 342, just like all remaining elements of the control unit 350. In order to make the indication of the LEDs, i.e. a visual indication, visible to outside the handle, the handle can be provided with one or more openings 368 at the level of the LEDs (for example one opening per LED at the level of the LED in question), and the water-tight housing is made, at least at the level of the LEDs and preferably entirely, of semi-transparent or transparent material, for example translucent plastics material.

The provision of this visual indication of the degree of consumption of the filter unit (that is to say, the extent to which the total supplied quantity of water has reached or exceeded the predefined maximum quantity of water) provides the user with an indication as to whether or not the filter unit 310, or if appropriate the filter cartridge 312, has exceeded its filter capacity and if appropriate needs to be replaced or cleaned.

The look-up tables, and also the calculated total quantity of water and any predefined maximum quantity of water that can be supplied to the filter unit 310, can be stored in a memory unit forming part of the computing unit, for example in the form of a memory implemented in the electronic circuit.

Furthermore, the control unit 350 can comprise a reset unit 370, for example a reset button. In the case of the filter unit 310 being replaced or, in the case of the filter unit comprising a filter cartridge 312, if the cartridge 312 is replaced, the accumulation of the supplied volumes of water can be restarted from zero via the reset unit 370. Thus, for example, the total volume of water supplied to the filter unit 310 can be stored in a memory unit of the computing unit. On activation of the reset unit 370, said reset unit can erase this part of the memory unit or restore it to its initial value. In the exemplary embodiment in Figures 4A, 4B and 4C, the reset unit is a reset button which can be depressed from the outside of the handle 330. If appropriate, the reset button is positioned in a recess in the handle, thus reducing the risk of any accidental activating of the reset unit.

Although the invention has been described with reference to preferred embodiments, it will be clear to a person skilled in the art that various alterations and adaptations in form and detail are possible without departing from the scope of protection of the claims for the present invention.

## Claims

1. A water supply unit (100) for providing purified water, the water supply unit (100) comprising:
- a filter element (110) for filtering water:
- at least one regulatable valve (120, 130, 140, 150) for controlling the flow rate of water which is supplied to the filter element (110), which valve (120, 130, 140, 150) can be set to more than two valve opening positions
- a handle (220) or turning knob for setting the at least one regulatable valve (120, 130, 140, 150) to the more than two valve opening positions by rotating the handle (220) or turning knob over a rotation angle, whereby a determined rotation angle corresponds with each of the more than two opening positions;
- one or more sensors (122, 132, 142, 152, 240) for issuing signals which are representative of the determined rotation angles
of the handle (220) or turning knob; of the handle (220) or turning knob;
- a clock (166) by which is determined the time duration during which the handle (220) of turning knob is turned over a determined rotation angle;
- a calculating unit (164) suitable for calculating the total quantity of water supplied to the filter element (110) using the signals from the one or more sensors and the time duration determined by means of the clock (166).

2. The water supply unit (100) according to Claim 1, wherein the water supply unit (100) further comprises a memory unit in which one or more look-up tables are stored whereby these look-up tables comprise information for converting the signals, issued by the one or more sensors, into a corresponding quantity of water.

3. The water supply unit (100) according to Claim 1 or 2, wherein the one or more sensors (122, 132, 142, 152, 240) are incorporated in the handle (220) or turning knob of the at least one regulatable valve.

4. The water supply unit (100) according to anyone of the Claims 1 to 3, wherein the water supply unit (100) comprises one regulatable valve (120, 130, 140, 150) and the calculating unit (164) is incorporated in the handle (220) or turning knob of the one regulatable valve.

5. The water supply unit (100) according to anyone of the Claims 1 to 4, wherein the calculating unit (164) further comprises a comparison unit for comparing the calculated total quantity of water supplied to the filter element (110) with a predefined maximum quantity of water.

6. The water supply unit (100) according to Claim 5, wherein the calculating unit (164) further comprises an output unit (168) for signaling a calculated total quantity of water supplied to the filter element (110) that exceeds a predefined part of the predefined maximum quantity of water.

7. The water supply unit (100) according to any of the preceding Claims comprising further a reset knob for resetting the calculated total quantity of water to zero.

8. A method for calculating a total quantity of water supplied to a filter element (110) comprised by a water supply unit (100) according to any of claims 1-7, the method including:
- supplying water to the filter element (110) by means of at least one regulatable valve (120, 130, 140, 150) for controlling the flow rate of water supplied to the filter element (110),
- setting the at least one valve (120, 130, 140, 150) to one of more than two opening positions by turning a handle (220) or turning knob over a rotation angle, corresponding to the one position of the valve;
- generating a signal which is representative of the rotation angle of the handle (220) or turning knob;
- determining the time duration during which the handle (220) of turning knob is turned over a determined rotation angle;
- calculating the total quantity of water delivered to the filter element (110), using the signals representative of the rotation angle of the handle (220) or rotation knob and said time duration.

9. The method according to Claim 9 further comprising:
- selecting a conversion factor from a look-up table with conversion factors, wherein each conversion factor corresponds to a determined rotation angle and
- wherein the total quantity of water delivered to the
filter element (110) is calculated on the basis of said time duration and the selected conversion factor.

10. The method according to any of Claims 8 or 9, wherein in addition the calculated total quantity of water supplied to the filter element (110) is compared with a predefined maximum quantity of water that can be supplied to the filter element (110).

11. The method according to Claim 10, wherein in addition an output signal is provided if the calculated total quantity of water supplied to the filter element (110) is greater than or equal to a predefined part of the predefined maximum quantity of water that can be supplied to the filter element (110).

12. The method according to one of Claims 8 to 11, wherein a signal is generated continuously representative of the rotation angle of the handle (220) or turning knob.

13. The method according to one of Claims 8 to 11, wherein a signal is generated that is representative of the rotation angle at the moment at which the valve opening position is set in or past a determined position.

14. The method according to Claim 13, wherein in addition the time duration is registered that elapses between receiving a first signal representative of the rotation angle of the handle (220) or turning knob and receiving a following signal representative of the rotation angle

## Patentansprüche

1. Wasserversorgungseinheit (100) zum Bereitstellen von gereinigtem Wasser, wobei die Wasserversorgungseinheit (100) umfasst:
- ein Filterelement (110) zum Filtern von Wasser;
- mindestens ein regulierbares Ventil (120, 130, 140, 150) zum Kontrollieren der Strömungsrate von Wasser, das dem Filterelement (110) zugeführt wird, wobei das Ventil (120, 130, 140, 150) in mehr als zwei Ventilöffnungspositionen gestellt werden kann;
- einen Griff (220) oder Drehknopf zum Einstellen des mindestens einen regulierbaren Ventils (120, 130, 140, 150) in die mehr als zwei Ventilöffnungspositionen durch Drehen des Griffs (220) oder Drehknopfs über einen Drehwinkel, wobei ein bestimmter Drehwinkel jeder der mehr als zwei Öffnungspositionen entspricht;
- einen oder mehr Sensor(en) (122, 132, 142, 152, 240) zur Ausgabe von Signalen, die für die bestimmten Drehwinkel des Griffs (220) oder Drehknopfs repräsentativ sind;
- eine Uhr (166), mit der die Zeitdauer bestimmt wird, in der der Griff (220) oder Drehknopf über einen bestimmten Drehwinkel gedreht wird;
- eine Berechnungseinheit (164), die zum Berechnen der Gesamtmenge an Wasser geeignet ist, die dem Filterelement (110) zugeführt wird, unter Verwendung der Signale von dem einen oder den mehreren Sensor(en) und der Zeitdauer, die mit der Uhr (166) bestimmt wird.

2. Wasserversorgungseinheit (100) nach Anspruch 1, wobei die Wasserversorgungseinheit (100) des Weiteren eine Speichereinheit umfasst, in der eine oder mehrere Verweistabelle(n) gespeichert sind, wobei diese Verweistabellen Informationen zum Umwandeln der Signale, die von dem einen oder den mehreren Sensor(en) ausgegeben werden, in eine entsprechende Wassermenge umfasst.

3. Wasserversorgungseinheit (100) nach Anspruch 1 oder 2, wobei der eine oder die mehreren Sensor(en) (122, 132, 142, 152, 240) in dem Griff (220) oder Drehknopf des mindestens einen regulierbaren Ventils eingebaut sind.

4. Wasserversorgungseinheit (100) nach einem der Ansprüche 1 bis 3, wobei die Wasserversorgungseinheit (100) ein regulierbares Ventil (120, 130, 140, 150) umfasst, und die Berechnungseinheit (164) in dem Griff (220) oder Drehknopf des einen regulierbaren Ventils eingebaut ist.

5. Wasserversorgungseinheit (100) nach einem der Ansprüche 1 bis 4, wobei die Berechnungseinheit (164) des Weiteren eine Vergleichseinheit zum Vergleichen der berechneten Gesamtmenge an Wasser, die dem Filterelement (110) zugeführt wird, mit einer vordefinierten Maximalmenge an Wasser umfasst.

6. Wasserversorgungseinheit (100) nach Anspruch 5, wobei die Berechnungseinheit (164) des Weiteren eine Ausgabeeinheit (160) zum Signalisieren einer berechneten Gesamtmenge an Wasser, die dem Filterelement (110) zugeführt wird, umfasst, die einen vordefinierten Teil der vordefinierten Maximalmenge an Wasser überschreitet.

7. Wasserversorgungseinheit (100) nach einem der vorangehenden Ansprüche, ferner umfassend einen Rückstellknopf zum Zurückstellen der berechneten Gesamtmenge an Wasser auf Null.

8. Verfahren zum Berechnen einer Gesamtmenge an Wasser, die dem Filterelement (110) zugeführt wird, das in einer Wasserversorgungseinheit (100) nach einem der Ansprüche 1 bis 7 enthalten ist, wobei das Verfahren enthält:
- Zuführen von Wasser zu dem Filterelement (110) mit Hilfe mindestens eines regulierbaren Ventils (120, 130, 140, 150) zum Kontrollieren der Strömungsrate von Wasser, das dem Filterelement (110) zugeführt wird,
- Einstellen des mindestens einen Ventils (120, 130, 140, 150) in eine oder mehr als zwei Öffnungsposition(en) durch Drehen eines Griffs (220) oder Drehknopfs über einen Drehwinkel entsprechend der einen Position des Ventils;
- Erzeugen eines Signals, das für den Drehwinkel des Griffs (220) oder Drehknopfs repräsentativ ist;
- Bestimmen der Zeitdauer, in der der Griff (220) oder Drehknopf über einen bestimmten Drehwinkel gedreht wird;
- Berechnen der Gesamtmenge an Wasser geeignet ist, die an das Filterelement (110) abgegeben wird, unter Verwendung der Signale, die für den Drehwinkel des Griffs (220) oder Drehknopfs repräsentativ sind, und der Zeitdauer.

9. Verfahren nach Anspruch 8, des Weiteren umfassend:
- Auswählen eines Umwandlungsfaktors aus einer Verweistabelle mit Umwandlungsfaktoren, wobei jeder Umwandlungsfaktor einem bestimmten Drehwinkel entspricht, und
- wobei die Gesamtmenge an Wasser, die an das Filterelement (110) abgegeben wird, auf der Basis der Zeitdauer und des gewählten Umwandlungsfaktors berechnet wird.

10. Verfahren nach einem der Ansprüche 8 oder 9, wobei zusätzlich die berechnete Gesamtmenge an Wasser, die dem Filterelement (110) zugeführt wird, mit einer vordefinierten Maximalmenge an Wasser verglichen wird, die dem Filterelement (110) zugeführt werden kann.

11. Verfahren nach Anspruch 10, wobei zusätzlich ein Ausgangssignal bereitgestellt wird, wenn die berechnete Gesamtmenge an Wasser, die dem Filterelement (110) zugeführt wird, größer oder gleich einem vordefinierten Teil der vordefinierten Maximalmenge an Wasser ist, die dem Filterelement (110) zugeführt werden kann.

12. Verfahren nach einem der Ansprüche 8 bis 11, wobei ein Signal kontinuierlich erzeugt wird, das für den Drehwinkel des Griffs (220) oder Drehknopfs repräsentativ ist.

13. Verfahren nach einem der Ansprüche 8 bis 11, wobei ein Signal, das für den Drehwinkel repräsentativ ist, in dem Augenblick erzeugt wird, in dem die Ventilöffnungsposition an einer oder über eine vorbestimmte(n) Position hinaus eingestellt wird.

14. Verfahren nach Anspruch 13, wobei zusätzlich die Zeitdauer registriert wird, die zwischen dem Empfang eines ersten Signals, das für den Drehwinkel des Griffs (220) oder Drehknopfs repräsentativ ist, und dem Empfang eines folgenden Signals, das für den Drehwinkel repräsentativ ist, verstreicht.

## Revendications

1. Unité d'alimentation en eau (100) pour fournir de l'eau purifiée, l'unité d'alimentation en eau (100) comprenant :
- un élément formant filtre (110) pour filtrer l'eau ;
- au moins une vanne réglable (120, 130, 140, 150) pour commander le débit d'eau qui est fourni à l'élément formant filtre (110), laquelle vanne (120, 130, 140, 150) peut être réglée sur plus de deux positions d'ouverture de vanne
- une poignée (220) ou un bouton tournant pour régler l'au moins une vanne réglable (120, 130, 140, 150) sur les plus de deux positions d'ouverture de vanne en faisant tourner la poignée (220) ou le bouton tournant sur un angle de rotation, de sorte qu'un angle de rotation déterminé correspond à chacune des plus de deux positions d'ouverture ;
- un ou plusieurs capteurs (122, 132, 142, 152, 240) pour délivrer des signaux qui sont représentatifs des angles de rotation déterminés de la poignée (230) ou du bouton tournant ;
- une horloge (166) par laquelle on détermine la durée pendant laquelle la poignée (220) du bouton tournant est tournée d'un angle de rotation déterminé ;
- une unité de calcul (164) appropriée pour calculer la quantité totale d'eau fournie à l'élément formant filtre (110) en utilisant les signaux provenant du ou des plusieurs capteurs et la durée déterminée au moyen de l'horloge (166).

2. Unité d'alimentation en eau (100) selon la revendication 1, dans laquelle l'unité d'alimentation en eau (100) comprend en outre une unité de mémoire dans laquelle une ou plusieurs tables de consultation sont stockées de sorte que ces tables de consultation comprennent des informations pour transformer les signaux, délivrés par le ou les plusieurs capteurs, en une quantité correspondante d'eau.

3. Unité d'alimentation en eau (100) selon la revendication 1 ou 2, dans laquelle le ou les plusieurs capteurs (122, 132, 142, 152, 240) sont incorporés dans la poignée (220) ou le bouton tournant de l'au moins une vanne réglable.

4. Unité d'alimentation en eau (100) selon l'une quelconque des revendications 1 à 3, dans laquelle l'unité d'alimentation en eau (100) comprend une vanne réglable (120, 130, 140, 150) et l'unité de calcul (164) est incorporée dans la poignée (220) ou le bouton tournant de la vanne réglable.

5. Unité d'alimentation en eau (100) selon l'une quelconque des revendications 1 à 4, dans laquelle l'unité de calcul (164) comprend en outre une unité de comparaison pour comparer la quantité totale calculée d'eau fournie à l'élément formant filtre (110) à une quantité maximale prédéterminée d'eau.

6. Unité d'alimentation en eau (100) selon la revendication 5, dans laquelle l'unité de calcul (164) comprend en outre une unité de sortie (168) pour signaler une quantité totale calculée d'eau fournie à l'élément formant filtre (110) qui dépasse une partie prédéterminée de la quantité maximale prédéterminée d'eau.

7. Unité d'alimentation en eau (100) selon l'une quelconque des revendications précédentes comprenant en outre un bouton de remise à l'état initial pour remettre la quantité totale calculée d'eau à zéro.

8. Procédé pour calculer une quantité totale d'eau fournie à un élément formant filtre (110) composé par une unité d'alimentation en eau (100) selon l'une quelconque des revendications 1 à 7, le procédé incluant :
- la fourniture d'eau à l'élément formant filtre (110) au moyen d'au moins une vanne réglable (120, 130, 140, 150) pour commander le débit d'eau fournie à l'élément formant filtre (110),
- le réglage de l'au moins une vanne (120, 130, 140, 150) sur une de plus de deux positions d'ouverture en tournant une poignée (220) ou un bouton tournant d'un angle de rotation, correspondant à une position particulière de la vanne ;
- la production d'un signal qui est représentatif de l'angle de rotation de la poignée (220) ou du bouton tournant ;
- la détermination de la durée pendant laquelle la poignée (220) du bouton tournant est tournée d'un angle de rotation déterminé ;
- le calcul de la quantité totale d'eau délivrée à l'élément formant filtre (110), en utilisant les signaux représentatifs de l'angle de rotation de la poignée (220) ou du bouton rotatif et ladite durée.

9. Procédé selon la revendication 9 comprenant en outre :
- la sélection d'un facteur de conversion provenant d'une table de consultation avec des facteurs de conversion, dans lesquels chaque facteur de conversion correspond à un angle de rotation déterminé, et
- dans lequel la quantité totale d'eau délivrée à l'élément formant filtre (110) est calculée sur la base de ladite durée et du facteur de conversion sélectionné.

10. Procédé selon l'une quelconque des revendications 8 ou 9, dans lequel en outre la quantité totale calculée d'eau fournie à l'élément formant filtre (110) est comparée à une quantité maximale prédéterminée d'eau qui peut être fournie à l'élément formant filtre (110).

11. Procédé selon la revendication 10, dans lequel en outre un signal de sortie est fourni si la quantité totale calculée d'eau fournie à l'élément formant filtre (110) est supérieure ou égale à une partie prédéterminée de la quantité maximale prédéterminée d'eau qui peut être fournie à l'élément formant filtre (110).

12. Procédé selon l'une des revendications 8 à 11, dans lequel un signal est produit de façon continue représentatif de l'angle de rotation de la poignée (220) ou du bouton tournant.

13. Procédé selon l'une des revendications 8 à 11, dans lequel un signal est produit qui est représentatif de l'angle de rotation au moment auquel la position d'ouverture de vanne est réglée sur ou au-delà d'une position déterminée.

14. Procédé selon la revendication 13, dans lequel en outre la durée est enregistrée qui s'écoule entre la réception d'un premier signal représentatif de l'angle de rotation de la poignée (220) ou du bouton tournant et la réception d'un signal suivant représentatif de l'angle de rotation.
